# EUROPÄISCHE PATENTSCHRIFT

(11) **EP 2 235 818 B1**
(45) Veröffentlichungstag und Bekanntmachung des Hinweises auf die Patenterteilung: **16.10.2013**
(21) Anmeldenummer: 09706907.4
(22) Anmeldetag: 28.01.2009
(51) Int. Cl.: H02P 23/14

(54) **VERFAHREN ZUR ERMITTLUNG EINES KORREKTURWERTES FÜR DIE WINKELLAGE DES ROTORS EINES ELEKTRISCH KOMMUTIERTEN REVERSIERBAREN SYNCHRON-MOTORS**
METHOD FOR ASCERTAINING A CORRECTION VALUE FOR THE ANGLE OF THE ROTOR OF AN ELECTRICALLY COMMUTED REVERSIBLE SYNCHRONOUS MOTOR
PROCÉDÉ DE DÉTERMINATION D'UNE VALEUR DE CORRECTION POUR LA POSITION ANGULAIRE DU ROTOR D'UN MOTEUR SYNCHRONE RÉVERSIBLE À COMMUTATION ÉLECTRIQUE

(30) Priorität: 31.01.2008 DE 102008006983
(43) Veröffentlichungstag der Anmeldung: 06.10.2010
(73) Patentinhaber: Siemens Aktiengesellschaft, 80333 München (DE)
(72) Erfinder: NOLTE, Uwe, 30890 Barsinghausen (DE); KRAUSE, Uwe, 30982 Pattensen (DE); SPANNBERGER, Jan, 31535 Neustadt (DE)
(86) Internationale Anmeldenummer: PCT/EP2009/050929
(87) Internationale Veröffentlichungsnummer: WO 2009/095397

(56) Entgegenhaltungen:
- EP-A- 0 571 076

## Beschreibung

Die Erfindung betrifft ein Verfahren zur Ermittlung eines Korrekturwertes für die Winkellage des Rotors eines elektrisch kommutierten reversierbaren Synchron-Motors bezogen auf einen zur Ansteuerung des Synchron-Motors verwendeten Sensor, insbesondere des Sensors eines permanent erregter Synchronmotors in Aufzugtürsteuerungssystemen, zur Erkennung infolge von Hysteresen, Ungenauigkeiten und/oder Fehlern bei der Montage des Sensors auftretender mechanischen Fehlwinkel und zur Verwendung bei daraus folgenden Fehlansteuerungen des Synchron-Motors.

Bei der Ansteuerung von elektrisch kommutierten Synchron-Motoren ist für optimale Kraftentfaltung bei minimalen Geräuschen die exakte Kenntnis der Rotorlage in Bezug auf die Wicklungslage des Stators unbedingt erforderlich. Im Hinblick auf minimale Geräuschentwicklung werden die Motoren üblicherweise mit sinusförmiger Ansteuerung betrieben, als Sensoren kommen beispielsweise Resolver, optische und magnetische Absolutwertgeber (Lichtschranken und Hall Elemente) oder inkrementelle Sensoren mit einem oder mehreren Indexgebern zum Einsatz.

Die Lage zwischen Motorwicklung und Sensor ist mechanisch vorgegeben; aufgrund von Montageungenauigkeiten kann die relative Lage zueinander jedoch variieren. Eine weitere Quelle für schwankende Winkel sind Hystereseeffekte des eingesetzten Sensoren. Diese Variationen führen zwangsweise zu einer Fehlansteuerung des Motors, da die gemessene und der tatsächliche Winkellage nicht exakt übereinstimmen. Insbesondere bei hochpoligen Motoren wirkt sich dieser Fehler stark negativ aus, da sich ein mechanischer Montagefehler mit dem Faktor der Polpaarzahl als elektrischer Fehlwinkel bei der Ansteuerung bemerkbar macht. Beispielsweise bewirkt eine Montageungenauigkeit von 1° bei einem zehn-polpaarigen Motor einen elektrischen Fehlwinkel von 10°. Bezogen auf den voreilenden Winkel von 90° entspricht dies bereits einer Fehlansteuerung von 11 %. Dadurch kommt es zu einer Verringerung des wirksamen Drehmomentes sowie einer Erhöhung der Geräuschentwicklung und zu vergrößerten Verlusten.

Bisher verringert man den elektrischen Fehlwinkels durch einen mechanischen Sensorabgleich oder durch eine interaktive oder automatisiert (z.B. bei der Fertigung) Eingabe eines Kompensationswertes für den Winkeloffset in die Steuerelektronik. Es sind sogar Sensoren am Markt, die bereits intern für die Verarbeitung eines derartigen Offsetwertes vorbereitet sind. Im Bereich Türsteuerungen werden elektrisch kommutierte Motoren noch selten verwendet und automatische Abgleichverfahren gemäß der Erfindung wurden bisher für diese Motoren noch nicht eingesetzt.

Aufgabe der vorliegenden Erfindung ist es, ein einfaches und sicheres Verfahren zum Abgleich der Sensoren zur Ansteuerung elektrisch kommutierter Synchron-Motoren zu schaffen, mit dem elektrische Fehlwinkel und Fehlansteuerungen der Motoren infolge von Ungenauigkeiten und/oder Fehlern bei der Montage der Sensoren sicher erkannt und in vorteilhafter Weise ohne weitere Hilfsmittel auch vor Ort korrigiert werden können.

Zur Lösung der Aufgabe wird aufeinanderfolgend vorgeschlagen:
a. dass der Motor in einer Eichfahrt mit einem extern aufgezwungenen Drehfeld angesteuert wird, das von dem die Lage des Rotors erfassenden externen Sensor unabhängig gebildet wird,
b. dass während der Eichfahrt zeitgleich der elektrische Winkel des Drehfeldes und der von dem externen Sensor gemessene mechanische Winkel des Rotors an mindestens einer Referenzposition erfasst und einander zugeordnet als erste Messreihe von Wertepaaren gespeichert werden,
c. dass die Richtung des Drehfeldes umgekehrt wird und zeitgleich der elektrische Winkel des richtungsumgekehrten Drehfeldes und der von dem externen Sensor gemessene mechanische Winkel des Rotors erfasst und ebenfalls einander zugeordnet als zweite Messreihe von Wertepaaren gespeichert werden,
d. dass vorzugsweise nach Abschluss der Eichfahrt aus einander korrespondierenden Wertepaaren beider Messreihen die Winkeldifferenz zwischen dem elektrischen Winkel des Drehfeldes und dem von dem externen Sensor gemessenen mechanischen Winkel des Rotors errechnet wird und
e. dass in einem weiteren Schritt aus den beiden errechneten Winkeldifferenzen durch Mittelwertbildung der Korrekturwert zur Berücksichtigung des tatsächlichen Fehlwinkels gebildet und zur Verwendung für den regulären Betrieb des Motors abgespeichert wird.

Während der Eichfahrt wird also die Phasendifferenz zwischen dem externen Drehfeld und dem vom externen Sensor erfassten Winkel unter Ausnutzung der Symmetrieeigenschaften des Motors und Lastmomentes an einer oder mehreren Referenzpositionen bestimmt. Mit Kenntnis der Phase des aufgezwungenen Drehfeldes lässt sich am Sensor, der fest mit dem Rotor verbunden ist, dieser Phasenunterschied an einer oder mehreren Referenzstellen eindeutig messen. Für den Abgleich ist der Absolutwert des allein durch die Last erzeugten Phasenunterschiedes unerheblich, da die Messung in beide Drehrichtungen ausgeführt wird und bei symmetrischer Last sich auch gleiche Phasenunterschiede ergeben. Bei Berücksichtung der Messwerte in beide Richtungen kompensiert sich der durch die Last entstandene Phasenfehler und man erhält den Ansteuerwert für die Wicklung bei Phasenfehler Null, also die exakte Lage des Rotors. Die Differenz zwischen der tatsächlichen Lage des Sensors und der planmäßig vorgesehen Lage an dieser Stelle ergibt dann den zur Phasenkorrektur eingesetzten Korrekturwert, der in einem geeigneten Speicher zur Verwendung für den Betrieb des Motors, abgelegt wird.

Bevorzugt sieht die Erfindung vor, dass die Eichfahrt in beiden Drehrichtungen mit gleich großen Lastmomenten durchgeführt wird oder, nach einem anderen Merkmal der Erfindung, der Motor während der Eichfahrt, ohne externe Last, frei laufend betrieben wird. Dadurch werden die für ein genaues Ergebnis wichtigen Symmetrieverhältnisse beim Messvorgang in beiden Richtungen sichergestellt.

Wird, wie alternativ vorgeschlagen ist, der Motor während der Eichfahrt mit bekanntem externen Lastmoment betrieben, so sind auch einseitige Messfahrten denkbar, die bekannten Momentenkennlinien können dann die fehlende Symmetrie ersetzen.

In einer Ausgestaltung des erfindungsgemäßen Verfahrens wird vorgeschlagen, die Eichfahrt in den normalen Betrieb zu integrieren. Auch das setzt voraus, das die Lastmomente, im Fall eines Türantriebes verursacht durch Gewicht und Reibung der Tür, bekannt sind, sofern sie nicht symmetrisch sind.

Wird, wie vorgeschlagen, zur Erzeugung des intern gebildeten Drehfeldes dem Synchron-Motor ein sinusförmiger Spannungsverlauf aufgezwungen, so äußert sich das Lastmoment als Phasenunterschied zwischen umlaufendem Feld und Rotor. Das Verfahren ist aber gleichsam für nicht sinusförmige (z.B. rechteck- oder trapezförmige) Ansteuerungen anwendbar.

Sichere Messergebnisse werden erreicht, wenn nach einem Vorschlag der Erfindung der Korrekturwert nach einer Einschwingphase bestimmt wird, wenn sich also das System stabilisiert hat und die durch die Beschleunigung der Last auftretende Phasendifferenz abgeklungen ist.

Durch Auswertung weiterer im System vorhandener Messgrößen können asymmetrische Lasten erkennbar gemacht und kompensiert werden. Durch Messung der Gesamtstromaufnahme oder der Nulldurchgänge bei Blockkommutierung lassen sich nicht symmetrische Lasten erkennen und einseitige Messfahrten auch ohne Kenntnis von Motor- und Lastverhältnissen realisieren.

Insgesamt löst die vorliegende Erfindung die Aufgabe auf eine sehr einfache Weise, indem der Motor in einer anderen als üblichen Betriebsart betrieben wird und auf diese Weise, ohne zusätzliche Sensorik, Motoreigenschaften mit großer Genauigkeit und geringem Aufwand ausgemessen werden können, was bisher nur unzureichend oder aufwändig möglich war.

## Patentansprüche

1. Verfahren zur Ermittlung eines Korrekturwertes für die Winkellage des Rotors eines elektrisch kommutierten reversierbaren Synchron-Motors bezogen auf einen zur Ansteuerung des Synchron-Motors verwendeten Sensor, insbesondere des Sensors eines permanent erregter Synchronmotors in Aufzugtürsteuerungssystemen, zur Erkennung infolge von Ungenauigkeiten und/oder Fehlern bei der Montage des Sensors auftretender mechanischen Fehlwinkel und zur Verwendung daraus folgender Fehlansteuerungen des Synchron-Motors,
**dadurch gekennzeichnet,**
a. **dass** der Motor in einer Eichfahrt mit einem extern aufgezwungenen Drehfeld angesteuert wird, das von dem die Lage des Rotors erfassenden externen Sensor unabhängig gebildet wird,
b. **dass** während der Eichfahrt zeitgleich der elektrische Winkel des Drehfeldes und der von dem externen Sensor gemessene mechanische Winkel des Rotors an mindestens einer Referenzposition erfasst und einander zugeordnet als erste Messreihe von Wertepaaren gespeichert werden,
c. **dass** die Richtung des Drehfeldes umgekehrt wird und zeitgleich der elektrische Winkel des richtungsumgekehrten Drehfeldes und der von dem externen Sensor gemessene mechanische Winkel des Rotors erfasst und ebenfalls einander zugeordnet als zweite Messreihe von Wertepaaren gespeichert werden,
d. **dass** vorzugsweise nach Abschluss der Eichfahrt aus einander korrespondierenden Wertepaare beider Messreihen die Winkeldifferenz zwischen dem elektrischen Winkel des Drehfeldes und dem von dem externen Sensor gemessenen mechanischen Winkel des Rotors errechnet wird und
e. **dass** in einem weiteren Schritt aus den beiden errechneten Winkeldifferenzen durch Mittelwertbildung der Korrekturwert zur Berücksichtigung des tatsächlichen Fehlwinkels gebildet und zur Verwendung für den regulären Betrieb des Motors abgespeichert wird.

2. Verfahren nach Anspruch 1,
**dadurch gekennzeichnet, dass**
die Eichfahrt in beiden Drehrichtungen mit gleich großen Lastmomenten durchgeführt wird.

3. Verfahren nach Anspruch 1 und 2,
**dadurch gekennzeichnet, dass**
der Motor während der Eichfahrt ohne externe Last frei laufend betrieben wird.

4. Verfahren nach Anspruch 1,
**dadurch gekennzeichnet, dass**
der Motor während der Eichfahrt mit bekanntem externem Lastmoment betrieben wird.

5. Verfahren nach Anspruch 4,
**dadurch gekennzeichnet, dass**
die Eichfahrt in den normalen Betrieb integriert wird.

6. Verfahren nach einem der Ansprüche 1 bis 5,
**dadurch gekennzeichnet, dass**
zur Erzeugung des intern gebildeten Drehfeldes dem Synchron-Motor ein sinusförmiger Spannungsverlauf aufgezwungen wird.

7. Verfahren nach einem der Ansprüche 1 bis 6,
**dadurch gekennzeichnet, dass**
der Korrekturwert nach einer Einschwingphase bestimmt wird.

8. Verfahren nach einem der Ansprüche 1 bis 7,
**dadurch gekennzeichnet, dass**
durch Auswertung weiterer im System vorhandener Messgrößen asymmetrische Lasten erkennbar gemacht und kompensiert werden.

## Claims

1. Method for ascertaining a correction value for the angular position of the rotor of an electrically commutated reversible synchronous motor on the basis of a sensor used for driving the synchronous motor, in particular the sensor of a permanent magnet synchronous motor in elevator door control systems, for ascertaining a mechanical phase displacement angles occurring during fitting of the sensor as a result of inaccuracies and/or errors and for using resultant erroneous driving of the synchronous motor,
**characterized**
a. **in that**, in a calibration journey, the motor is driven by an externally forced rotating field, which is formed independently of the external sensor detecting the position of the rotor,
b. **in that**, during the calibration journey, the electrical angle of the rotating field and the mechanical angle of the rotor measured by the external sensor are detected simultaneously at at least one reference position and are stored, in association with one another, as a first measurement series of pairs of values,
c. **in that** the direction of the rotating field is reversed and the electrical angle of the rotating field whose direction has been reversed and the mechanical angle of the rotor measured by the external sensor are detected simultaneously and likewise stored, in association with one another, as a second measurement series of pairs of values,
d. **in that**, preferably, once the calibration journey has come to an end, the angular difference between the electrical angle of the rotating field and the mechanical angle of
the rotor measured by the external sensor is calculated from mutually corresponding pairs of values in the two measurement series, and
e. **in that**, in a further step, the correction value for taking into consideration the actual phase displacement angle is formed from the two calculated angular differences by means of averaging and is stored for use for the regular operation of the motor.

2. Method according to Claim 1,
**characterized in that**
the calibration journey is performed in both directions of rotation with identical load torques.

3. Method according to Claims 1 and 2,
**characterized in that**
the motor is operated in free-running fashion without an external load during the calibration journey.

4. Method according to Claim 1,
**characterized in that**
the motor is operated with a known external load torque during the calibration journey.

5. Method according to Claim 4,
**characterized in that**
the calibration journey is integrated in the normal operating mode.

6. Method according to one of Claims 1 to 5,
**characterized in that**
a sinusoidal voltage profile is forced upon the synchronous motor in order to produce the internally formed rotating field.

7. Method according to one of Claims 1 to 6,
**characterized in that** the correction value is determined after a transient phase.

8. Method according to one of Claims 1 to 7,
**characterized in that**
asymmetric loads are made identifiable and compensated for by evaluating further measured variables existing in the system.

## Revendications

1. Procédé de détermination d'une valeur de correction de la position angulaire du rotor d'un moteur synchrone réversible à commutation électrique par rapport à un capteur utilisé pour l'excitation du moteur synchrone, notamment du capteur d'un moteur synchrone à excitation permanente dans des systèmes de commande de porte d'ascenseur, pour la détection d'angles mécaniques défectueux se produisant en raison d'imprécisions et/ou d'erreurs au montage du capteur et pour l'utilisation de mauvaises excitations qui s'ensuivent du moteur synchrone, **caractérisé**
a. **en ce qu'**on excite le moteur dans une marche d'étalonnage par un champ tournant imposé extérieurement et formé indépendamment du capteur extérieur détectant la position du rotor,
b. **en ce que**, pendant la marche d'étalonnage, on détecte en même temps l'angle électrique du champ tournant et l'angle mécanique du rotor mesuré par le capteur extérieur sur au moins une position de référence et on les mémorise associés l'un à l'autre comme première série de mesure de paires de valeur,
c. **en ce qu'**on inverse le sens du champ tournant et on détecte en même temps l'angle électrique du champ tournant de sens inversé et l'angle mécanique du rotor mesuré par le capteur extérieur et on les mémorise également associés l'un à l'autre comme deuxième série de mesure de paires de valeur,
d. **en ce que**, de préférence, après la fin de la marche d'étalonnage, on calcule à partir de paires de valeur se correspondant l'une à l'autre de deux séries de mesure, la différence angulaire entre l'angle électrique du champ tournant et l'angle mécanique du rotor mesuré par le capteur extérieur et
e. **en ce que**, dans un autre stade, on forme à partir des deux différences angulaires calculées, en formant une valeur moyenne, la valeur de correction en tenant compte de l'angle erroné réel et on la mémorise pour l'utiliser dans le fonctionnement régulier du moteur.

2. Procédé suivant la revendication 1,
**caractérisé en ce que**
on effectue la marche d'étalonnage dans les deux sens de rotation en ayant de mêmes grands couples de charge.

3. Procédé suivant la revendication 1 et 2,
**caractérisé en ce que**
on fait fonctionner le moteur pendant la marche d'étalonnage en roue libre sans charge extérieure.

4. Procédé suivant la revendication 1,
**caractérisé en ce que**
on fait fonctionner le moteur pendant la marche d'étalonnage à un couple de charge extérieur connue.

5. Procédé suivant la revendication 4,
**caractérisé en ce que**
on intègre la marche d'étalonnage dans le fonctionnement normal.

6. Procédé suivant l'une des revendications 1 à 5,
**caractérisé en ce que**
pour la production du champ tournant formé de manière interne, on impose une courbe de tension sinusoïdale au moteur synchrone.

7. Procédé suivant l'une des revendications 1 à 6,
**caractérisé en ce que**
on détermine la valeur de correction après la phase transitoire.

8. Procédé suivant l'une des revendications 1 à 7,
**caractérisé en ce que**
on rend détectable et l'on compense des charges dissymétriques en exploitant d'autres grandeurs de mesure présentes dans le système.
